# FASCICULE DE BREVET EUROPEEN

(11) **EP 1 230 553 B1**
(45) Date de publication et mention de la délivrance du brevet: **27.08.2008**
(21) Numéro de dépôt: 00983378.1
(22) Date de dépôt: 16.11.2000
(51) Int. Cl.: G01N 35/02, B01L 3/00

(54) **ANALYSEUR CHIMIQUE OU BIOCHIMIQUE A REGULATION DE LA TEMPERATURE REACTIONNELLE**
CHEMISCHER ODER BIOLOGISCHER ANALYSATOR MIT REAKTIONSTEMPERATURANPASSUNG
CHEMICAL OR BIOCHEMICAL ANALYSER WITH REACTION TEMPERATURE ADJUSTMENT

(30) Priorité: 16.11.1999 FR 9914361
(43) Date de publication de la demande: 14.08.2002
(73) Titulaire: Maxmat SA, 34940 Montpellier Cedex 9 (FR)
(72) Inventeur: CHOJNACKI, André, F-34940 Montpellier Cedex 09 (FR); RANDRIANARIVO, Jeanet, F-34380 Saint Martin de Londres (FR)
(74) Mandataire: Hecké, Gérard
(86) Numéro de dépôt international: PCT/FR2000/003190
(87) Numéro de publication internationale: WO 2001/036982

(56) Documents cités:
- EP-A- 0 289 789
- EP-A- 0 496 962
- WO-A-96/07918
- US-A- 4 054 416
- US-A- 5 352 963
- US-A- 5 653 940
- US-A- 5 814 277

## Description

### Domaine technique de l'invention

L'invention est relative à un analyseur biochimique comprenant:
- un module de stockage de tubes d'échantillons et de tubes de réactifs ,
- un module de prélèvement comprenant une paire d'unités de prélèvement automatique à fonctionnement indépendant, équipées chacune d'une pipette d'aspiration rétractable pour transférer des quantités prédéterminées d'échantillons et de réactifs du module de stockage vers une cuve réactionnelle d'un module d'analyse ,
- des moyens électriques de chauffage de la cuve réactionnelle et des moyens de régulation des moyens de chauffage pour assurer une température d'analyse prédéterminée dans l'analyseur.

### Etat de la technique

Des analyseurs automatiques d'échantillons du genre mentionnés sont décrits dans les documents WO9607918, US 4054416 et US 5814277 pour effectuer des analyses biochimiques.

Dans les analyseurs connus, l'enceinte de stockage des tubes d'échantillons et des tubes de réactifs peut être refroidie à une température froide pour garantir une conservation des propriétés biochimiques des produits. L'analyse réactionnelle est initiée par le mélange des échantillons et des réactifs dans des cupules, et un dispositif de mesure optique permet de déterminer la densité optique du mélange. La cuve réactionnelle est maintenue à une température constante durant l'analyse, et cette température est fixée à 37°C pour coïncider à celle du corps humain. Le problème posé est celui des fuites d'énergie calorifique, susceptibles d'entraîner des surconsommations d'énergie électrique pour réguler la température des cuves de réaction.

### Objet de l'Invention

Le but de l'invention est d'assurer une homogénéité de la température réactionnelle indépendamment de l'emplacement des cupules contenant le mélange échantillons et réactifs à analyser, tout en assurant la compatibilité du chauffage de la cuve réactionnelle avec la fonctionnalité de la mesure optique.

Ce but est atteint par un analyseur selon les revendications annexées.

Selon une variante de l'invention, la plaque de chauffage peut être opaque, en étant munie d'une pluralité de trous s'étendant coaxialement dans l'alignement des cupules de manière à autoriser le passage du faisceau lumineux du dispositif de mesure optique.

Selon une autre variante de l'invention, la plaque de chauffage est transparente, et est formée par une plaque en verre de faible épaisseur, sur la face inférieure de laquelle sont imprimées les résistances par un procédé de dépôt à couche mince, ou tout autre procédé de revêtement. La plaque de chauffage en verre évite tout écoulement de liquide, et l'efficacité du chauffage est maximum, car la plaque est placée juste en-dessous des cupules. Une plaquette transparente non trouée peut également être accolée sous la plaque de chauffage opaque à trous.

Le volume de chauffage est placé juste en-dessous de la microplaque, laquelle se trouve chauffée par convection de la manière la plus économique possible, étant donné que la chaleur adopte naturellement une direction ascendante.

Selon une caractéristique de l'invention, un dispositif préchauffeur des réactifs est intégré dans l'unité de prélèvement, et comporte:
- un filament chauffant enroulé autour d'un tube métallique à faible inertie thermique,
- une paire de capteurs de température agencés aux extrémités du tube pour mesurer les valeurs de la température du liquide réactif prélevé, et la température d'injection dans la cupule,
- et un circuit de régulation destiné à ajuster la puissance électrique consommée par le filament chauffant.

Selon une autre caractéristique de l'invention, l'unité de prélèvement comprend de plus un dispositif de mixage piloté par un électro-aimant pour provoquer un mouvement d'oscillation alternatif de la pipette lorsque cette dernière se trouve en position abaissée dans la cupule de la cuve réactionnelle, de manière à brasser le mélange échantillons et réactifs.

Préférentiellement, chaque unité de prélèvement est pourvue d'un détecteur de niveau capacitif permettant d'arrêter le mouvement de descente de la pipette d'aspiration légèrement en-dessous de la surface du liquide à prélever.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés dans lesquels:
- la figure 1 est une vue schématique en perspective d'un analyseur biochimique équipé d'un module de prélèvement et d'une cuve réactionnelle selon l'invention;
- la figure 2 montre une vue en coupe des unités de prélèvement, et de la cuve réactionnelle de la figure 1 ;
- les figures 3 et 4 représentent des variantes de réalisation du système de chauffage de la cuve réactionnelle;
- la figure 5 est une vue de profil du module de prélèvement de la figure 2, représentant le dispositif de mixage;
- les figures 6 et 7 sont des vues en élévation et de profil d'une variante de réalisation.

### Description d'un mode de réalisation préférentiel

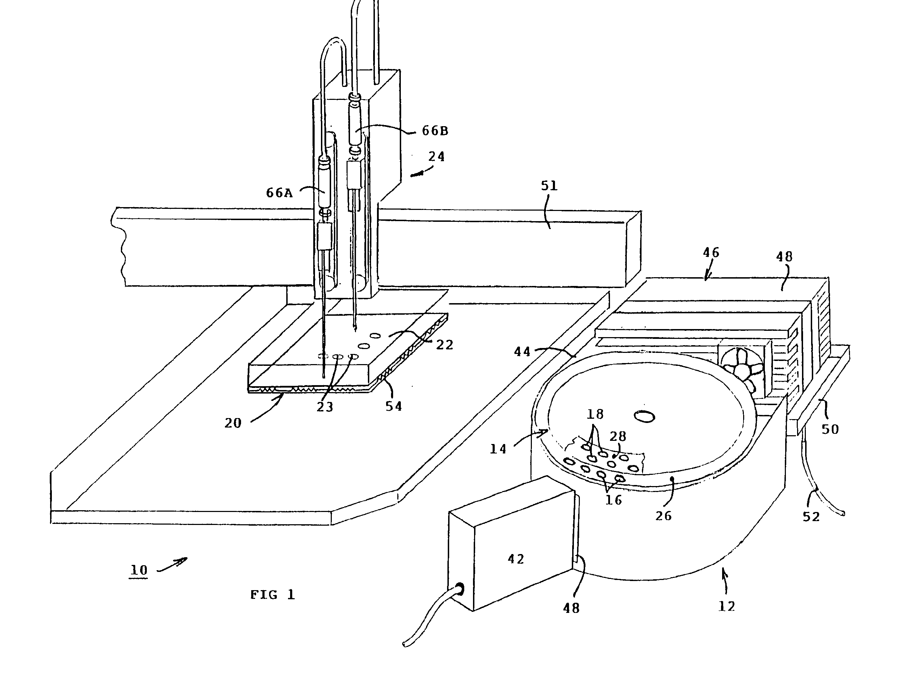

Sur la figure 1, un analyseur 10 biochimique est composé:
- d'un module de stockage 12 à plateau 14 rotatif de support des tubes d'échantillons 16 et des tubes de réactifs 18,
- d'un module d'analyse 20 formé par une cuve réactionnelle 22 à cupules 23 dans lesquelles s'effectue le mélange échantillon-réactif pour une analyse photométrique effectuée par un dispositif de mesure optique du type décrit par example dans la demande de brevet français FR-A-2784464.
- et d'un module de prélèvement 24 pour transférer des quantités prédéterminées d'échantillons et de réactifs du plateau 14 vers la cuve réactionnelle 22, et en assurer le mélange dans les cupules 23.

Le plateau 14 du module de stockage 12 comporte une première couronne 26 externe supportant les tubes d'échantillons 16, renfermant notamment du sang, sérum, plasma, etc..., selon le type d'analyse à effectuer, et une deuxième couronne 28 interne concentrique portant les tubes de réactifs 18.

Les échantillons sont contenus d'une manière classique dans des tubes primaires formés par des éprouvettes standardisées de 5ml. Les réactifs sont conditionnés dans des tubes primaires standards de 10ml, ce qui permet directement de disposer d'un système d'identification analogue à celui des échantillons. Un lecteur de code à barres 42 est disposé à cet effet à la périphérie du plateau 14 pour le repérage de l'ensemble des tubes 16, 18 à travers un hublot 48.

Le plateau 14 rotatif est logé dans une enceinte 44 isothermique pour minimiser les échanges calorifiques avec l'extérieur. L'enceinte 44 est pourvue d'un dispositif de refroidissement 46 à effet Peltier pour maintenir les échantillons et les réactifs à une température adéquate de conservation, par exemple 9°C. Le dissipateur 48 du dispositif de refroidissement 46 est légèrement incliné, et est muni d'un réceptacle 50 équipé d'une buse d'évacuation 52 des condensats.

La cuve réactionnelle 22 à cupules 23 du module d'analyse 20 biochimique et hémostatique est formée par une microplaque fixe, réalisée en matériau transparent pour autoriser le passage vertical du faisceau lumineux issu du dispositif de mesure photométrique et colorimétrique do type décrit par example dans la demande de brevet français FR-A- 2784464.

Le module de prélèvement 24 est porté par un chariot mobile 51 à trois axes de liberté pour transférer les liquides d'échantillons et de réactifs vers les emplacements appropriés de la cuve réactionnelle 22. L'analyse du mélange échantillons et réactifs s'effectue dans les cupules 23 de la cuve réactionnelle 22, à une température constante correspondant à la température du corps humain, de l'ordre de 37°C.

La mise en température de la cuve réactionnelle 22 est réalisée avec un minimum de déperdition de chaleur, tout en permettant une totale liberté de déplacement de la tête de mesure (non représentée) sous la microplaque. Cette dernière prend appui sur une plaque de chauffage 54, laquelle est positionnée près de la partie inférieure des cupules 23.

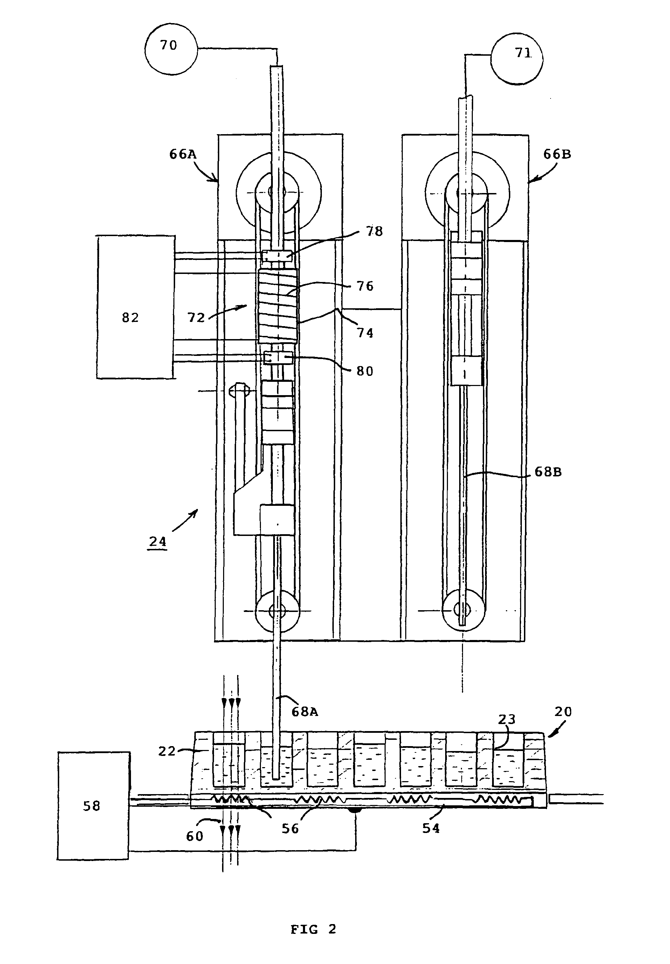

Sur la figure 2, la plaque de chauffage 54 comprend des résistances 56 électriques agencées sur toute la surface de manière à assurer le chauffage par convection de la cuve réactionnelle 22. Le chauffage par effet Joule des résistances 56 de la plaque 54 est contrôlé par un circuit de régulation 58 à détecteur thermique. L'ensemble est agencé pour répartir uniformément la température de chauffage sur toute la surface, indépendamment de l'emplacement des cupules 23 sur la cuve réactionnelle 22, et pour assurer une régulation satisfaisante de la température à 37°C.

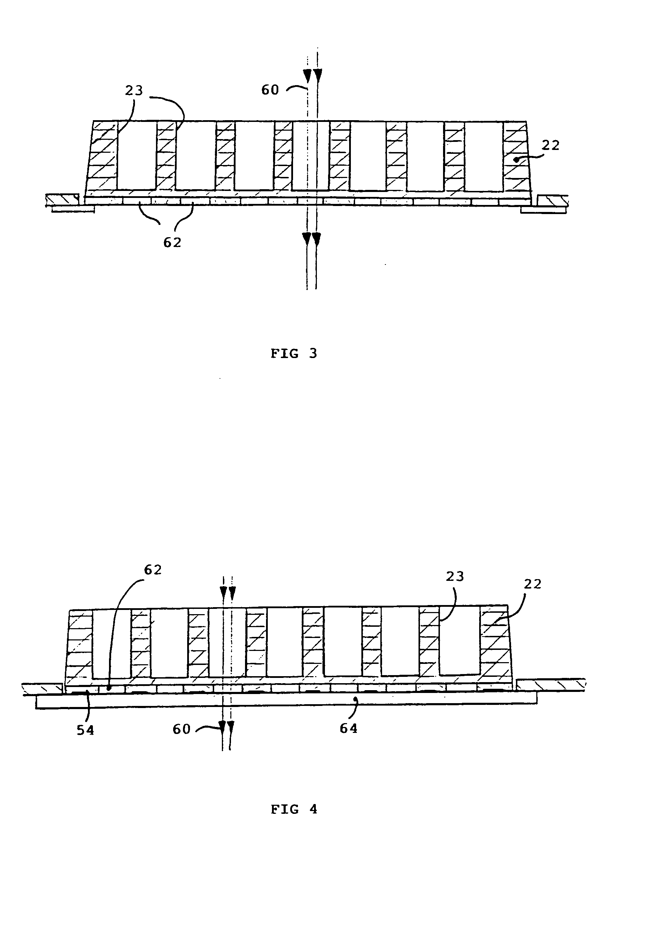

On remarque sur les figures 2 à 4 que le faisceau lumineux 60 du dispositif de mesure optique est dirigé dans chaque cupule 23 de la cuve réactionnelle 22 selon un axe vertical qui traverse la plaque de chauffage 54. A cet effet, la plaque de chauffage 54 selon la figure 3 peut être opaque, en étant munie d'une pluralité de trous 62 s'étendant coaxialement avec les cupules 23. La répartition des trous 62 permet le passage du faisceau lumineux 60, mais présente l'inconvénient de souiller l'intérieur de l'analyseur 10 en cas de fuite accidentelle de liquide.

Cet inconvénient peut être évité selon le dispositif de la figure 2 en utilisant une plaque de chauffage 54 transparente, formée par un verre spécial de faible épaisseur transmettant les rayons ultra-violets. Les résistances 56 peuvent être imprimées sur la face inférieure de la plaque en verre par un procédé de dépôt par couche mince, ou par tout autre procédé connu de l'homme de l'art. L'emplacement des réseaux de résistances 56 est choisi pour dégager les aires optiques des cupules 23. La plaque de chauffage 54 en verre évite tout écoulement de liquide, et l'efficacité du chauffage est maximum, car la plaque 54 est placée juste en-dessous des cupules 23.

La figure 4 montre la plaque de chauffage 54 selon la figure 3 insérée entre la base de la cuve réactionnelle 22 et une plaquette transparente 64 non trouée.

Sur la figure 2, la partie supérieure représente le dispositif de transfert de liquide équipant le module de prélèvement 24. Il réalise les trois fonctions suivantes:
- le prélèvement des échantillons et des réactifs stockés dans les tubes d'échantillons 16 et les tubes de réactifs 18 du plateau 14 rotatif se trouvant dans l'enceinte 44 à la température froide de 9°C;
- l'acheminement des prélèvements vers les cupules 23 de la cuve réactionnelle 22 se trouvant à la température chaude de 37°C,
- et le mixage du mélange dans les cupules 23 pour un développement homogène de la réaction biochimique.

Le dispositif de transfert comporte une paire d'unités de prélèvement 66A, 66B automatique, équipées chacune d'une pipette d'aspiration 68A, 68B rétractable, destinée à être mis en contact avec les liquides, soit dans les tubes 16, 18 du plateau 14 lors du prélèvement , soit dans les cupules 23 de la cuve réactionnelle 22 après le transfert. Les unités de prélèvement 66A, 66B sont reliées à au moins une pompe 70, 71 de précision assurant le prélèvement et la restitution des échantillons et des réactifs. Un système de lavage des pipettes 68A, 68B est également prévu entre chaque phase de prélèvement.

L'unité de prélèvement 66A ou 66B est dotée avantageusement d'un dispositif préchauffeur 72 rapide pour assurer la mise à température du mélange réactionnelle, en tenant compte de la différence de température entre le module de stockage 12 (t=9°C) et la cuve réactionnelle 22 (t=37°C). Le dispositif préchauffeur 72 possède une très faible inertie thermique, et comprend un tube 74 métallique, notamment en acier inoxydable ayant un diamètre de l'ordre de 3mm, revêtu sur sa surface interne d'une mince couche de protection en polytétrafluoréthylène pour éviter toute contamination. Un filament chauffant 76 est enroulé autour de la surface latérale externe du tube 74 pour chauffer rapidement le liquide réactif traversant la unité de prélèvement 66A. A chaque extrémité du tube 74 est monté un capteur de température 78, 80 permettant de connaître avec précision la valeur de la température du liquide prélevé dans les tubes de réactifs 18, et la température finale d'injection dans la cupule 23. Chaque capteur de température 78, 80 est formé à titre d'exemple par une bague en cuivre associée par soudure avec un fil en constantan pour constituer un thermocouple. D'autres technologies sont possibles pour réaliser les capteurs de température 78, 80.

Le filament chauffant 76 et les capteurs de température 78, 80 sont connectés électriquement à un circuit de régulation 82 destiné à ajuster la puissance électrique au filament chauffant 76 en fonction de la température du liquide prélevé, du volume total de liquide à prélever, et du débit de prélèvement.

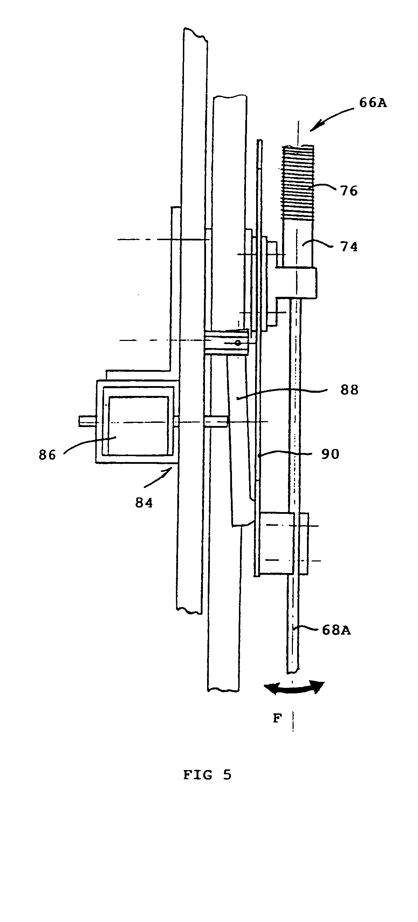

Sur la figure 5, l'homogénéisation du mélange réactionnel est assuré par un dispositif de mixage 84 réalisé par un mouvement de battement de la pipette 68A d'échantillons dans le mélange réactionnel à l'intérieur de la cupule 23 appropriée. Les vibrations mécaniques sont engendrées par un électro-aimant 86 agissant sur la pipette 68A par l'intermédiaire d'un levier d'actionnement 88 articulé. Lorsque la pipette 68A d'échantillons se trouve dans la cupule 23, l'extrémité du levier 88 se trouve en regard d'une pièce butoir 90 en métal élastique solidaire de la pipette 68A. L'alimentation de l'électro-aimant 86 provoque un mouvement d'oscillation alternatif de la pipette 68A (voir flèche F) pour assurer le mixage du mélange réactionnel. La fréquence d'oscillation forcée de la pipette 68A est ajustable par l'alimentation de l'électro-aimant 86, et une vis de réglage (non représentée) coopère avec le levier d'actionnement 88 pour régler l'amplitude des oscillations mécaniques. Il en résulte un brassage du mélange réactionnel sans formation de bulles d'air susceptibles d'affecter la précision de mesure par déformation du ménisque. En mode de prélèvement ou de transfert, le levier 88 se trouve en position de repos, et l'électro-aimant 86 n'est pas alimenté.

Sur la figure 2, l'unité de prélèvement 66A est équipée à la fois d'un dispositif préchauffeur 72 et d'un dispositif de mixage 84. Pour des raisons d'industrialisation, l'autre unité de prélèvement 66B juxtaposée peut avoir une structure identique. Le dispositif préchauffeur 72 est actif uniquement si l'une des unités de prélèvement est utilisée pour les liquides réactifs. Dans ce cas, le dispositif de mixage 84 reste inactif en inhibant toute alimentation de l'électro-aimant 86. Pour l'autre unité de prélèvement utilisée pour les échantillons, c'est le fonctionnement inverse qui neutralise le dispositif préchauffeur 72, et active le dispositif de mixage 84 lorsque la pipette 68A correspondante se trouve en position abaissée à l'intérieur de la cupule 23. Lors de la séquence de préparation du mélange réactionnel, les réactifs sont généralement introduits dans les cupules 23 avant les échantillons.

Pour minimiser les contaminations, les pipettes 68A, 68B en position abaissée, doivent tremper dans le liquide jusqu'à une profondeur minimum. Un dispositif de détection capacitive permet d'arrêter le mouvement de descente des pipettes 68A, 68B à quelques millimètres en-dessous de la surface du liquide à prélever. Le dispositif de détection comprend un circuit oscillateur dont la fréquence varie avec la différence de capacité électrique entre l'air et le liquide.

Préférentiellement, le détecteur de niveau capacitif peut être numérique à sensibilité programmable.

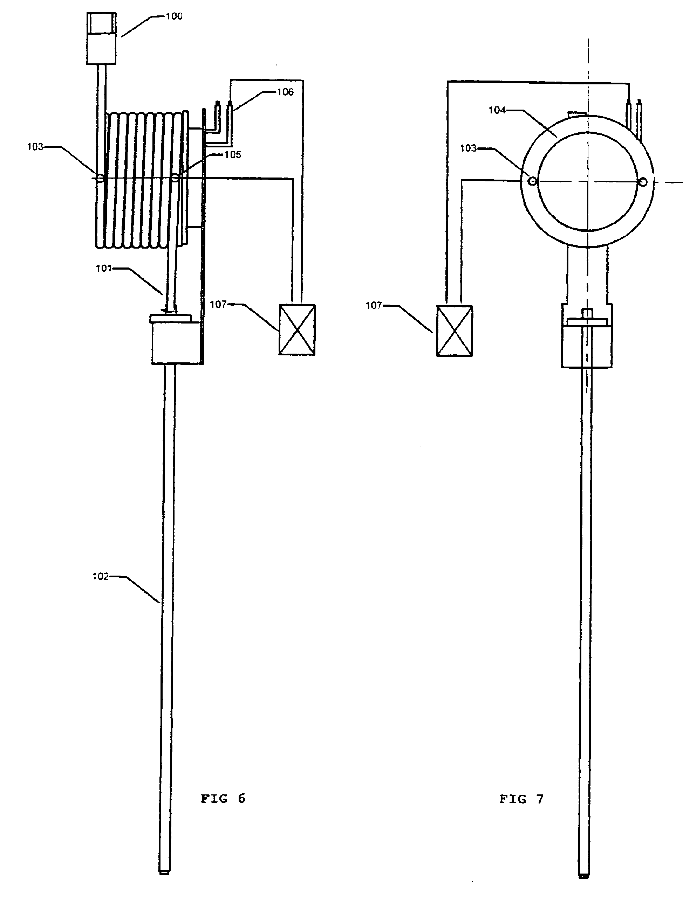

Sur les figures 6 et 7, le système de préchauffage de l'unité de prélèvement est formé par un tube 101 de transport du liquide, ledit tube étant enroulé sur un tambour 104 d'échange calorifique. Des gorges semi-circulaires sont ménagées sur le tambour 104 pour épouser l'empreinte du tube 101 en téflon. Un fil chauffant 106 est enroulé en colimaçon dans les gorges de manière à être en contact direct avec le tube 101 en diminuant l'inertie thermique. Le dispositif est régulé par un régulateur 107 connecté à un double capteur de température 103, 105.

## Revendications

1. Analyseur chimique ou biochimique comprenant:
- un module de stockage (12) de tubes d'échantillons (16) et de tubes de réactifs (18). - un modulé d'analyse (20) avec une cuve réactionnelle (22),
- un module de prélèvement (24) comprenant une paire d'unités de prélèvement (66A, 66B) automatique à fonctionnement indépendant, équipées chacune d'une pipette d'aspiration (68A, 68B) rétractable pour transférer des quantités prédéterminées d'échantillons et de réactifs du module de stockage vers la cuve réactionnelle (22) du module d'analyse (20),
- des moyens électriques de chauffage de la cuve réactionnelle et des moyens de régulation des moyens de chauffage pour assurer une température d'analyse prédéterminée dans l'analyseur,
analyseur **caractérisé en ce que** les moyens de chauffage de la cuve réactionnelle, constituée par une microplaque dans laquelle sont disposées des cupules (23), comportent une plaque de chauffage (54), disposée au voisinage de la partie inférieure des cupules de manière à chauffer la cuve réactionnelle par convection, la plaque de chauffage (54) comportant un réseau de résistances électriques de chauffage (56) réparties sur toute la surface de la plaque de manière à répartir uniformément la température de chauffage sur toute la surface de la cuve réactionnelle (22) indépendamment de l'emplacement des cupules (23), la plaque de chauffage (54) étant opaque et munie d'une pluralité de trous (62) s'étendant coaxialement dans l'alignement des cupules (23) de manière à autoriser le passage du faisceau lumineux d'un dispositif de mesure optique.

2. Analyseur selon la revendication 1, **caractérisé en ce qu'**une plaquette transparente (64) non trouée est accolée sous la plaque de chauffage (54) opaque à trous (62).

3. Analyseur chimique ou biochimique comprenant:
- un module de stockage (12) de tubes d'échantillons (16) et de tubes de réactifs (18).
- un module d'analyse (20) avec une cure réactionnelle (22),
- un module de prélèvement (24) comprenant une paire d'unités de prélèvement (66A, 66B) automatique à fonctionnement indépendant, équipées chacune d'une pipette d'aspiration (68A, 68B) rétractable pour transférer des quantités prédéterminées d'échantillons et de réactifs du module de stockage vers la cuve réactionnelle (22) du module d'analyse (20),
- des moyens électriques de chauffage de la cuve réactionnelle et des moyens de régulation des moyens de chauffage pour assurer une température d'analyse prédéterminée dans l'analyseur,
analyseur **caractérisé en ce que** les moyens de chauffage de la cuve réactionnelle, constituée par une microplaque dans laquelle sont disposées des cupules (23), comportent une plaque de chauffage (54), disposée au voisinage de la partie inférieure des cupules de manière à chauffer la cuve réactionnelle par convection, la plaque de chauffage (54) comportant un réseau de résistances électriques de chauffage (56) réparties sur toute la surface de la plaque de manière à répartir uniformément la température de chauffage sur toute la surface de la cuve réactionnelle (22) indépendamment de l'emplacement des cupules (23), la plaque de chauffage (54) étant transparente et formée par une plaque en verre, sur la face inférieure de laquelle sont imprimées les résistances (56).

4. Analyseur selon l'une quelconque des revendication 1 à 3, **caractérisé en ce qu'**au moins une unité de prélèvement comporte un dispositif préchauffeur (72) pour la mise à température du liquide réactif avant son introduction dans les cupules (23) de ladite cuve réactionnelle (22).

5. Analyseur selon la revendication 4, **caractérisé en ce que** le dispositif préchauffeur (72) de l'unité de prélèvement est un dispositif à double capteur.

6. Analyseur selon la revendication 5, **caractérisé en ce que** le dispositif préchauffeur (72) de l'unité de prélèvement (66A, 66B) comporte un filament chauffant (76) enroulé autour d'un tube (74) métallique à faible inertie thermique, une paire de capteurs de température (78, 80) agencés aux extrémités du tube (74) pour mesurer les valeurs de la température du liquide réactif prélevé et la température d'injection dans la cupule (23), et un circuit de régulation (82) destiné à ajuster la puissance électrique consommée par le filament chauffant (76) en fonction des températures mesurées par les capteurs de température (78, 80).

7. Analyseur selon l'une des revendications 4 et 5, **caractérisé en ce que** le dispositif préchauffeur de l'unité de prélèvement (66A, 66B) comporte un tube (101) enroulé sur un tambour (104) d'échange calorifique, et un fil chauffant (106) monté en colimaçon dans des gorges du tambour (104) de manière à être en contact direct avec le tube (101) en diminuant l'inertie thermique.

8. Analyseur selon l'une quelconque des revendications 1 à 7, **caractérisé en ce que** l'unité de prélèvement (66A, 66B) comprend, de plus, un dispositif de mixage (84) piloté par un électro-aimant (86) pour provoquer un mouvement d'oscillation alternatif de la pipette (68A) lorsque cette dernière se trouve en position abaissée dans la cupule (23) de la cuve réactionnelle (22) de manière à brasser le mélange échantillons et réactifs.

9. Analyseur selon la revendication 8, **caractérisé en ce que** l'électro-aimant (86) agit sur un levier d'actionnement (88) coopérant avec une pièce butoir (90) en métal élastique solidaire de la pipette (68A).

10. Analyseur selon l'une quelconque des revendications 1 à 9, **caractérisé en ce que** chaque unité de prélèvement (66A, 66B) est pourvue d'un détecteur de niveau capacitif, notamment numérique à sensibilité programmable, permettant d'arrêter le mouvement de descente de la pipette (68A, 68B) quelques millimètres en-dessous de la surface du liquide à prélever.

## Claims

1. Chemical or biochemical analyzer comprising:
- a storage module (12) of sample tubes (16) and of reactant tubes (18),
- an analysis module (20) with a reaction tank (22),
- a sampling module (24) comprising a pair of independently-operating automatic sampling units (66A, 66B) each equipped with a retractable suction pipette (68A, 68B) to transfer predefined quantities of samples and reactants from the storage module to the reaction tank (22) of the analysis module (20),
- electric heating means of the reaction tank and control means of the heating means to ensure a predefined analysis temperature in the analyzer,
analyzer **characterized in that** the heating means of the reaction tank, formed by a micro-plate wherein cups (23) are arranged, comprise a heating plate (54) arranged near the bottom part of the cups so as to heat the reaction tank by convection, the heating plate (54) comprising a network of electrical heating resistors (56) distributed over the whole surface of the plate so as to distribute the heating temperature uniformly over the whole surface of the reaction tank (22) independently from the location of the cups (23), the heating plate (54) being opaque and provided with a plurality of holes (62) extending coaxially in the alignment of the cups (23) so as to allow the light beam of an optical measuring device to pass through.

2. Analyzer according to claim 1, **characterized in that** a transparent plate (64) without holes is adjoined under the opaque heating plate (54) with holes (62).

3. Chemical or biochemical analyzer comprising:
- a storage module (12) of sample tubes (16) and of reactant tubes (18),
- an analysis module (20) with a reaction tank (22),
- a sampling module (24) comprising a pair of independently-operating automatic sampling units (66A, 66B) each equipped with a retractable suction pipette (68A, 68B) to transfer predefined quantities of samples and reactants from the storage module to the reaction tank (22) of the analysis module (20),
- electric heating means of the reaction tank and control means of the heating means to ensure a predefined analysis temperature in the analyzer,
analyzer **characterized in that** the heating means of the reaction tank, formed by a micro-plate in which cups (23) are arranged, comprise a heating plate (54) arranged near the bottom part of the cups so as to heat the reaction tank by convection, the heating plate (54) comprising a network of electrical heating resistors (56) distributed over the whole surface of the plate so as to distribute the heating temperature uniformly over the whole surface of the reaction tank (22) independently from the location of the cups (23), the heating plate (54) being transparent and formed by a glass plate on the bottom face of which the resistors (56) are printed.

4. Analyzer according to any one of claims 1 to 3, **characterized in that** at least one sampling unit comprises a pre-heating device (72) for bringing the reactant liquid up to the required temperature before said liquid is injected into the cups (23) of said reaction tank (22).

5. Analyzer according to claim 4, **characterized in that** the pre-heating device (72) of the sampling unit is a double-sensor device.

6. Analyzer according to claim 5, **characterized in that** the pre-heating device (72) of the sampling unit (66A, 66B) comprises a heating filament (76) wound round a metal tube (74) with low thermal inertia, a pair of temperature sensors (78, 80) arranged at the ends of the tube (74) to measure the values of the temperature of the sampled reactant liquid and the temperature at which injection into the cup (23) takes place, and a control circuit (82) designed to adjust the electric power consumed by the heating filament (76) according to the temperatures measured by the temperature sensors (78, 80).

7. Analyzer according to one of claims 4 and 5, **characterized in that** the pre-heating device of the sampling unit (66A, 66B) comprises a tube (101) wound on a heat exchange drum (104), and a heating wire (106) mounted spirally in grooves of the drum (104) so as to be in direct contact with the tube (101) and reduce the thermal inertia.

8. Analyzer according to any one of claims 1 to 7, **characterized in that** the sampling unit (66A, 66B) further comprises a mixing device (84) controlled by an electromagnet (86) to bring about an alternating oscillation movement of the pipette (68A) when the latter is in a lowered position in the cup (23) of the reaction tank (22) so as to stir the mixture formed by the samples and reactants.

9. Analyzer according to claim 8, **characterized in that** the electromagnet (86) acts on an actuating lever (88) operating in conjunction with a stop part (90) made of flexible metal integral to the pipette (68A).

10. Analyzer according to any one of claims 1 to 9, **characterized in that** each sampling unit (66A, 66B) is provided with a capacitive level detector, in particular a digital detector with programmable sensitivity, enabling the downward movement of the pipette (68A, 68B) to be stopped a few millimetres below the surface of the liquid to be sampled.

## Patentansprüche

1. Chemischer oder biochemischer Analysator, der umfasst:
- ein Lagermodul (12) für Röhren mit Proben (16) und Röhren mit Reagenzien,
- ein Analysemodul (20) mit einem Reaktionsbehälter (22),
- ein Entnahmemodul (24) mit zwei Einheiten zur automatischen Entnahme (66A, 66B), die unabhängig voneinander arbeiten und jeweils mit einer einziehbaren Ansaugpipette (68A, 68B) zum Übertragen vorbestimmter Mengen von Proben und Reagenzien vom Lagermodul zum Reaktionsbehälter (22) des Analysemoduls (20) ausgestattet sind,
- elektrische Erwärmungsmittel für den Reaktionsbehälter und Mittel zur Regulierung der Erwärmungsmittel zur Sicherstellung einer vorbestimmten Temperatur in dem Analysator,
Analysator, der **dadurch gekennzeichnet ist, dass** die Erwärmungsmittel für den Reaktionsbehälter, der aus einer Mikroplatte besteht, in dem kleine Schalen (23) vorgesehen sind, eine Heizplatte (54) umfasst, die nahe dem unteren Bereich der Schalen angeordnet ist, um den Reaktionsbehälter durch Konvektion zu erwärmen, wobei die Heizplatte (54) ein Netz aus elektrischen Heizwiderständen (56) umfasst, die über die ganze Oberfläche der Platte verteilt sind, um die Heiztemperatur unabhängig von der Anordnung der Schalen (23) gleichmäßig über die ganze Oberfläche des Reaktionsbehälters (22) zu verteilen, wobei die Heizplatte (54) lichtundurchlässig und mit einer Mehrzahl von Löchern (62) versehen ist, die sich in Koaxialität mit den Schalen (23) erstrecken, damit der Lichtstrahl eines optischen Messgeräts durch diese hindurch gelangen kann.

2. Analysator nach Anspruch 1, **dadurch gekennzeichnet, dass** eine nicht durchbrochene, transparente Platte (64) gegen und unter der lichtundurchlässigen, mit Löchern (62) versehenen Heizplatte (54) angeordnet ist.

3. Chemischer oder biochemischer Analysator, der umfasst:
- ein Lagermodul (12) für Röhren mit Proben (16) und Röhren mit Reagenzien,
- ein Analysemodul (20) mit einem Reaktionsbehälter (22),
- ein Entnahmemodul (24) mit zwei Einheiten zur automatischen Entnahme (66A, 66B), die unabhängig voneinander arbeiten und jeweils mit einer einziehbaren Ansaugpipette (68A, 68B) für das Übertragen vorbestimmter Mengen von Proben und Reagenzien vom Lagermodul zum Reaktionsbehälter (22) des Analysemoduls (20) ausgestattet sind,
- elektrische Heizmittel für den Reaktionsbehälter und Mittel zur Regulierung der Heizmittel, um eine vorbestimmte Analysetemperatur in dem Analysator sicherzustellen,
Analysator, der **dadurch gekennzeichnet ist, dass** die Erwärmungsmittel für den Reaktionsbehälter, der aus einer Mikroplatte besteht, in der Schalen (23) vorgesehen sind, eine Heizplatte (54) umfassen, die nahe dem unteren Bereich der Schalen vorgesehen ist, um den Reaktionsbehälter durch Konvektion zu erwärmen, wobei die Heizplatte (54) ein Netz aus elektrischen Heizwiderständen (56) umfasst, die über die ganze Oberfläche der Platte verteilt sind, um die Heiztemperatur unabhängig von der Anordnung der Schalen (23) gleichmäßig über die ganze Oberfläche des Reaktionsbehälters (22) zu verteilen, wobei die Heizplatte (54) transparent ist und von einer Glasplatte gebildet wird, an deren Innenseite die Widerstände (56) aufgedruckt sind.

4. Analysator nach einem der Ansprüche 1 bis 3, **dadurch gekennzeichnet, dass** mindestens eine Entnahmeeinheit eine Vorwärmeinrichtung (72) zum Aufheizen der Reaktionsflüssigkeit vor ihrem Einleiten in die Schalen (23) des genannten Reaktionsbehälters (22) umfasst.

5. Analysator nach Anspruch 4, **dadurch gekennzeichnet, dass** die Vorwärmeinrichtung (72) der Entnahmeeinheit eine Einrichtung mit zwei Messfühlern ist.

6. Analysator nach Anspruch 5, **dadurch gekennzeichnet, dass** die Vorwärmeinrichtung (72) der Entnahmeeinheit (66A, 66B) einen Heizfaden (76), der um eine Metallröhre (74) mit schwachem Wärmeleitwiderstand gewickelt ist, ein Paar Temperaturfühler (78, 80), die an den Enden der Röhre (74) angeordnet sind, um die Werte der Temperatur der entnommenen Reaktionsflüssigkeit und die Einspritztemperatur in der Schale (23) zu messen, sowie eine Steuerungsschaltung (82) umfasst, die in Abhängigkeit von den von den Temperaturfühlern (78, 80) gemessenen Temperaturen die elektrische Leistung regulieren soll, die der Heizfaden (76) verbraucht.

7. Analysator nach einem der Ansprüche 4 und 5, **dadurch gekennzeichnet, dass** die Vorwärmeinrichtung der Entnahmeeinheit (66A, 66B) ein Rohr (101) umfasst, das auf eine Wärmeaustauschtrommel (104) aufgerollt ist, sowie einen Heizfaden (106), der schneckenförmig in Ausnehmungen der Trommel (104) montiert ist, um in direktem Kontakt mit dem Rohr (101) zu stehen und den Wärmeleitwiderstand zu verringern.

8. Analysator nach einem der Ansprüche 1 bis 7, **dadurch gekennzeichnet, dass** die Entnahmeeinheit (66A, 66B) ferner eine Mischvorrichtung (84) umfasst, die von einem Elektromagneten (86) gesteuert wird, um eine abwechselnde Hin-und Herbewegung der Pipette (68A) zu bewirken, wenn sich diese in abgesenkter Stellung in der Schale (23) des Reaktionsbehälters (22) befindet, um das Gemisch aus Proben und Reagenzien zu durchmischen.

9. Analysator nach Anspruch 8, **dadurch gekennzeichnet, dass** der Elektromagnet (86) auf einen Betätigungshebel (88) wirkt, der mit einem Anschlagstück (90) aus elastischem Metall zusammenwirkt, das fest an der Pipette (68A) sitzt.

10. Analysator nach einem der Ansprüche 1 bis 9, **dadurch gekennzeichnet, dass** jede Entnahmeeinheit (66A, 66B) mit einem kapazitiven Füllstandsmesser versehen ist, der insbesondere digital arbeitet und eine programmierbare Empfindlichkeit hat, der ein Stoppen der Abwärtsbewegung der Pipette (68A, 68B) einige Millimeter unter der Oberfläche der zu entnehmenden Flüssigkeit ermöglicht.
